(19) Europäisches Patentamt
European Patent Office
Office européen des brevets

(11) **EP 4 144 689 A1**

(12) **EUROPEAN PATENT APPLICATION**

(43) Date of publication:
**08.03.2023 Bulletin 2023/10**

(21) Application number: **21195378.1**

(22) Date of filing: **07.09.2021**

(51) International Patent Classification (IPC):
**C01B 3/00** $^{(2006.01)}$    **C01B 6/10** $^{(2006.01)}$
**C01B 6/24** $^{(2006.01)}$    **C01C 1/02** $^{(2006.01)}$

(52) Cooperative Patent Classification (CPC):
**C01B 6/243; C01B 3/0031; C01B 6/10; C01B 6/24;
C01C 1/026**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Commissariat à l'Energie Atomique et
aux Energies
Alternatives
75015 Paris (FR)**

(72) Inventors:
• **HAJIYEV, Parviz
  38054 GRENOBLE CEDEX 09 (FR)**
• **NGUYEN, Huynh Duc
  38054 GRENOBLE CEDEX 09 (FR)**

(74) Representative: **Nony
  11 rue Saint-Georges
  75009 Paris (FR)**

(54) **PROCESS FOR PREPARING A METAL HYDRIDE**

(57)    Process for preparing a metal hydride of formula $A_xMH_{x+m}$ and a borane compound $BH_3$, starting from a product of formula $A_xM(BNH)_{x+m}$, wherein:

A is an alkali metal,

M is a metal different from an alkali metal,

$$0 \leq x \leq 2$$

m>0,

the process comprising:

a) contacting the product of formula $A_xM(BNH)_{x+m}$ with a catalyst comprising a transition metal in solution in an aprotic polar solvent, such as to separate the metal hydride of formula $A_xMH_{x+m}$ and a hydrogenated boron nitride compound BNH,

b) the synthesis of the borane compound $BH_3$, from the hydrogenated boron nitride compound BNH, the synthesis comprising:

- a digestion reaction of the boron nitride compound BNH in a gaseous atmosphere containing, even consisting in, an anhydrous hydrogen halide acid gas comprising at least one halogen element Y, such as to produce a boron halide $BY_3$, Y being preferably chlorine CI,

- a hydrodehalogenation of the boron halide, in a hydrogen gas atmosphere to obtain the borane compound $BH_3$.

EP 4 144 689 A1

## Description

The present invention deals with the chemical storage of hydrogen by means of metal borohydride-based materials. It notably deals with a process for preparing compounds for manufacturing an ammine metal borohydride starting from the said ammine metal borohydride which has been dehydrogenated.

Metal borohydride-based materials have been intensively investigated for their potential as high-capacity hydrogen storage materials. The thermolysis of a metal borohydride $MBH_4$ results in hydrogen release at a dehydrogenation temperature which is inversely proportional to the electronegativity of the metal M cation. Hence, high electronegativity metal borohydrides are well suited for mobile applications due to their low decomposition temperature. For instance, some transition metal borohydrides present a decomposition temperature lower than room temperature.

A method is known for preparing an ammine metal borohydride of formula $A_xM(BH_4)_{x+m}(NH_3)_n$ wherein A is an alkali metal, M is a metal different from an alkali metal, $0 \leq x \leq 2$, n > 0, and m > 0. This known method comprises performing a nucleophilic addition reaction, implemented in liquid ammonia $NH_3$, of a metal hydride of formula $A_xMH_{x+m}$ and a borane complex of formula $L \cdot BH_3$, L being a solvent forming a complex with a borane compound $BH_3$, such as to obtain a metal borohydride complex of formula $A_xM(BH_4)_{x+m}L_n$, and a displacement reaction between the metal borohydride complex and liquid ammonia to obtain the ammine metal borohydride.

It is also known that the ammine metal borohydride can be regenerated by implementing a specific process, starting from the product of formula $A_xM(BNH)_{x+m}$ obtained as a reaction by-product of the dehydrogenation of the ammine metal borohydride of formula $A_xM(BH_4)_{x+m}(NH_3)_n$. However, this specific process requires heating the product of formula $A_xM(BNH)_{x+m}$ at a temperature greater than the melting temperature of the metal compound AxM, usually greater than 400 °C. This lowers its energetic yield.

Therefore, there is a need for a process for preparing starting compounds for manufacturing a preparing an ammine metal borohydride of formula $A_xM(BH_4)_{x+m}(NH_3)_n$ which alleviates the hereabove drawback.

The aim of the invention is to satisfy this need.

Embodiments according to a first aspect of the invention relate to a process for preparing a metal hydride of formula $A_xMH_{x+m}$ and a borane compound $BH_3$, starting from a product of formula $A_xM(BNH)_{x+m}$, wherein:

A is an alkali metal,
M is a metal different from an alkali metal,

$$0 \leq x \leq 2$$

m>0,
the process comprising:

a) contacting the product of formula $A_xM(BNH)_{x+m}$ with a catalyst comprising a transition metal in solution in an aprotic polar solvent, such as to separate the metal hydride of formula $A_xMH_{x+m}$ and a hydrogenated boron nitride compound BNH,

b) the synthesis of the borane compound $BH_3$, from the hydrogenated boron nitride compound BNH, the synthesis comprising:

- a digestion reaction of the boron nitride compound BNH in a gaseous atmosphere containing, even consisting in, an anhydrous hydrogen halide acid gas comprising at least one halogen element Y, such as to produce a boron halide $BY_3$,
- a hydrodehalogenation of the boron halide in a hydrogen gas atmosphere to obtain the borane compound $BH_3$.

Embodiments according to a second aspect of the invention also relate to a process for preparing a metal hydride of formula $A_xMH_{x+m}$ and a borane compound $BH_3$, starting from a product of formula $A_xM(BNH)_{x+m}$, wherein:

A is an alkali metal,
M is a metal different from an alkali metal,

$$0 \leq x \leq 2$$

m>0,

the process further comprising:

a'$_1$) reacting the metal hydride of formula $A_xM(BNH)_{x+m}$ with ammonia such as obtain an ammoniated product of formula $A_xM(NH_2)_{x+m}$ and a hydrogenated boron nitride compound BNH,

a'$_2$) the hydrogenation of the ammoniated product of formula $A_xM(NH_2)_{x+m}$ such as to obtain an metal hydride of formula $A_xMH_{x+m}$,

the process comprising the separation of the hydrogenated boron nitride compound BNH from the ammoniated product of formula $A_xM(NH_2)_{x+m}$ before step a'$_2$) or from the metal hydride of formula $A_xMH_{x+m}$ after step a'$_2$), and

b) the synthesis of the borane compound $BH_3$, from the hydrogenated boron nitride compound BNH, the synthesis comprising:

- a digestion reaction of the boron nitride compound BNH in a gaseous atmosphere containing, even consisting in, an anhydrous hydrogen halide acid gas comprising at least one halogen element Y, such as to produce a boron halide $BY_3$,
- a hydrodehalogenation of the boron halide in a hydrogen gas atmosphere to obtain the borane compound $BH_3$.

The process of the invention, according to anyone of its first and second aspects, presents an improved yield. It also provides an easy chemical route to produce the starting materials which are required to the manufacture of the ammine metal borohydride.

The process according to the invention, according to anyone of its first and second aspects, can comprise one or more of the following optional features.

The product of formula $A_xM(BNH)_{x+m}$ is preferably obtained from the dehydrogenation of an ammine borohydride fuel of formula $A_xM(BH_4)_{x+m}(NH_3)_n$ with n > 0.

The coefficient x can be greater than or equal to 0.1, greater than or equal to 0.2, greater than or equal to 0.5, greater than or equal to 1.0, greater than or equal to 1.5, greater than or equal to 1.8, greater than or equal to 1.9.

The coefficient x can be equal to 2.

The coefficient x can be lower than or equal to 1.9, lower than or equal to 1.8, lower than or equal to 1.5, lower than or equal to 1.0, lower than or equal to 0.5, lower than or equal to 0.2, lower than or equal to 0.1.

Preferably, the coefficient m ranges between 2 and 4. It can be equal to 2.

The alkali metal A can be chosen among Li, Na, K and their mixtures. In particular, the alkali metal A can be Li.

The metal M can be chosen among transition metals, earth alkali metals, post-transitions metals and their mixtures.

Preferably, the metal M is chosen among Mg, Sc, Y, Ti, Zr, Mn, Zn, Al and their mixtures.

Preferably, the metal M is chosen among Zn, Al, Mg and their mixtures. Preferably, the metal M is chosen among Mg, Al and their mixtures. In particular, the metal M can be Mg.

In some embodiments, the product of formula $A_xM(BNH)_{x+m}$ can be $AZn(BNH)_{x+m}$ wherein A is chosen among Li, Na, K and their mixtures.

In some preferred embodiments, the product of formula $A_xM(BNH)_{x+m}$ can be $Li_xAl(BNH)_{3+x}$.

In some preferred embodiments, the product of formula $A_xM(BNH)_{x+m}$ can be $A_2Mg(BNH)_4$ wherein A is chosen among Li, Na, K and their mixtures. More especially, it can be of formula $Li_2Mg(BNH)_4$.

According the first aspect of the invention, preferably, step a) is performed at a temperature lower than the melting temperature of the metal compound $A_xM$.

Preferably, step a) is performed at a temperature ranging between 0°C and 150 °C.

Step a) can be performed in a $H_2$ gas atmosphere, preferably in an autoclave, at a pressure greater than 0.1 MPa, for instance greater than 1.3 MPa, and lower than 35 MPa.

Notably, at step a), the product of formula $A_xM(BNH)_{x+m}$, the catalyst and the solvent can be introduced, into a chamber of the autoclave, for instance at a temperature ranging between 20 °C and 35 °C and at atmospheric pressure, notably in a neutral gaseous atmosphere. The autoclave chamber can be sealed after and the $H_2$ pressure, and optionally the temperature, can be increased inside the chamber for improving the yield of the catalysis reaction.

Prior to being put in contact with the solvent, the product of formula $A_xM(BNH)_{x+m}$ and the catalyst can be mixed, for instance by ball milling, in order to increase the surface of contact between the catalyst and the product of formula $A_xM(BNH)_{x+m}$. For example, in an embodiment the catalyst comprises Ti and the metal M is Al, and mixing results in the formation of Ti-catalyzed Al.

The product of formula $A_xM(BNH)_{x+m}$ can be in the form of a solid chunk.

The catalysis aims at catalysing the hydrogenation reaction occurring between hydrogen and the product of formula $A_xM(BNH)_{x+m}$. The catalyst can be in liquid or solid, notably in the form of a powder.

The catalyst comprises a transition metal which is preferably chosen among Ti, Zr, Fe and their mixtures.

Preferably the transition metal is titanium.

The catalyst can be chosen among an halogenide of the transition metal, an alkoxide of the transition metal and their mixtures. For instance, the catalyst can be chosen among a fluoride of the transition metal, a chloride of the transition metal, and a bromide of the transition metal. The catalyst can be chosen among titanium chloride $TiCl_3$, n-butoxide $Ti(OBu)_4$, zirconium n-propoxide $Zr(OPr)_3$, fer-ethylate $Fe(OEt)_2$, $TiF_3$, $TiBr_3$ and their mixtures. More especially, it can be chosen among $TiCl_3$, $Ti(OBu)_4$ and their mixtures. Preferably, the catalyst is $TiCl_3$.

The solvent is a polar and aprotic. It can be chosen among an ether, an amine of formula RR'R"N, wherein R, R' and R" can each be of formula $C_nH_{2n-1}$, in particular $CH_3$ and $C_2H_5$, and phosphoramide, notably hexamethylphosphoramide.

Preferably, the solvent is chosen among tetrahydrofuran, dimethyl sulphide, triethylamine, diethyl ether, dimethyl ether, diglyme (bis(2-methoxyethyl) ether) and their mixtures. Preferably the solvent is tetrahydrofuran, also known as the acronym "THF".

At the end of step a), the product of formula $A_xMH_{x+m}$ and the boron nitride compound BNH are separated.

Preferably the product of formula $A_xMH_{x+m}$ is dissolved in the solvent and the boron nitride compound BNH is solid. In particular, the boron nitride compound BNH can be extracted from the solution comprising the product of formula $A_xMH_{x+m}$ by filtering.

As a variant, at the end of step a), the product of formula $A_xMH_{x+m}$ and the boron nitride compound BNH can both be dissolved or solid and can be extracted through a density-base separation technique, which takes advantage of the differences of density between boron nitride and the product of formula $A_xMH_{x+m}$.

According to the second aspect of the invention, preferably, at least one, preferably both of steps $a'_1$) and $a'_2$) are performed at a temperature lower than the melting temperature of the metal compound $A_xM$. More especially, at least one, preferably both of steps $a'_1$) and $a'_2$) can be performed at a temperature ranging between 15 °C and 150 °C.

Preferably, step $a'_1$) is performed at a temperature ranging between 15 °C and 40 °C, notably at room temperature.

Step $a'_1$) can be performed by mixing $A_xM(BNH)_{x+m}$ and liquid ammonia. Mixing is preferably performed by ball milling, preferably for a period ranging between 400 minutes and 800 minutes.

Step $a'_1$) can be performed at a pressure greater than 0.7 MPa. Preferably, step $a'_1$) is performed at a pressure of 1 MPa.

Preferably, step $a'_1$) is performed by reacting the metal hydride of formula $AxM(BNH)x+m$ with liquid ammonia.

Step $a'_2$) can be performed in a $H_2$ gas atmosphere, preferably in an autoclave, at a pressure greater than 0.1 MPa, for instance greater than 1.3 MPa, and lower than 35MPa.

Step $a'_2$) can be performed at a temperature ranging between 20 °C and 150 °C.

Step $a'_2$) can be performed in a polar and aprotic solvent, preferably, the solvent being chosen among tetrahydrofuran, dimethyl sulphide, diethyl ether, dimethyl ether, diglyme (bis(2-methoxyethyl) ether) and their mixtures. Preferably the solvent is tetrahydrofuran.

In a variant, the process comprises the separation of the hydrogenated boron nitride compound BNH the ammoniated product of formula $A_xM(NH_2)_{x+m}$ before step $a'_2$).

In particular, at the end of step $a'_1$), the hydrogenated boron nitride compound BNH and the ammoniated product of formula $A_xM(NH_2)_{x+m}$ can be separated by taking advantage of the difference of their solubility in liquid ammonia. Notably, the hydrogenated boron nitride compound BNH can be solid whereas the ammoniated product of formula $A_xM(NH_2)_{x+m}$ can be dissolved in ammonia. For instance, the hydrogenated boron nitride compound BNH can be separated from the ammoniated product of formula $A_xM(NH_2)_{x+m}$ by filtering. After separation, the ammoniated product of formula $A_xM(NH_2)_{x+m}$ can be precipitated before the hydrogenation step $a'_2$).

In another variant, the process comprises the separation of the hydrogenated boron nitride compound BNH from the metal hydride of formula $A_xMH_{x+m}$ after step $a'_2$). Preferably, the product of formula $A_xMH_{x+m}$ is dissolved in the solvent and the boron nitride compound BNH is solid. In particular, the boron nitride compound BNH can be extracted from the solution comprising the product of formula $A_xMH_{x+m}$ by filtering. As a variant, the product of formula $A_xMH_{x+m}$ and the boron nitride compound BNH can both be dissolved or solid and can be extracted through a density-base separation technique, which takes advantage of the differences of density between boron nitride and the product of formula AxMHx+m.

Step $a'_2$) can be performed by contacting the mixture comprising the ammoniated product of formula $A_xM(NH_2)_{x+m}$ and the hydrogenated boron nitride compound BNH with $H_2$. Said contacting can be made in presence of the solvent, for instance tetrahydrofuran, or in the absence of the solvent. In a variant, step $a'_2$) can be performed by hydrogenating only the ammoniated product of formula AxM(NH2)$_{x+m}$.

According to anyone of the first and second aspects of the invention, at step b), the halogen element Y can be chosen among F, Cl, Br, I and their mixtures. Preferably, the halogen element can be chosen among Cl and Br. Preferably the halogen element Y is chlorine Cl.

Prior to the digestion reaction, a solution can be prepared comprising the hydrogenated boron nitride compound BNH, a solvent chosen among toluene, tetrahydrofuran, diethyl-ether, 1,4-dioxane, 1-butyl-3-methylimidazolium chloride, $CS_2$, CCl4, $C_2Cl_4$ and their mixtures and a compound chosen among $AlCl_3$, $CuCl_2$ and their mixtures that form together with the halide acid a superacid/solvent system.

Preferably, the digestion reaction results in the formation of an ammonia halide of formula $NH_4Y$ and the process comprises the production of ammonia $NH_3$ from the ammonia halide, for instance by means of a heating that results in the decomposition of the ammonia halide into ammonia and at least one hydrogen halide gas HY, which can be reused.

The digestion reaction can be implemented at a temperature ranging between 20°C and 100°C and at a pressure ranging between 1 bar and 80 bar, for instance at a pressure of about 40 bar.

For instance, the digestion reaction can be performed by mixing the BNH compound with $CS_2$ and $AlCl_3$ and submitting the obtained solution in anhydrous HCl gas at a temperature of 80°C and at a pressure of 40 bar. In a variant, the digestion reaction can be performed by mixing the BNH compound with $CS_2$ and $AlBr_3$ in anhydrous HBr gas at a temperature of 80°C and a pressure of 30 bar.

The process can comprise the synthesis of the borane compound $BH_3$, complexed in a solvent L in the form of a complex of formula $L \cdot BH_3$.

According to some embodiments, step b) can comprise a preparation of a solution of the boron halide $BY_3$ in the solvent L such as to form a $L \cdot BY_3$ complex

and the hydrodehalogenation is performed with boron halide being so complexed in the form of the L•BY$_3$ complex, such as to obtain the borane compound BH$_3$, complexed in a solvent L in the form of a complex of formula L•BH$_3$.

The preparation of the solution of BY$_3$ in the solvent L can comprise the stirring of the solvent L in a gaseous BY$_3$ atmosphere or the stirring of the solvent L with a solution of BY$_3$ at a temperature less than or equal to 30°C, preferably less than 15°C, preferably less than 5°C, notably at 0°C or at -78°C.

Once the complex L•BY$_3$ is formed, the process can comprise mixing the L•BY$_3$ complex in the solvent L.

According to some preferred embodiments, the process comprises a step c), successive to step b), comprising the preparation a solution of the boron compound BH$_3$ with a solvent L such as to form a borane complex of formula L•BH$_3$.

The solvent L is preferably an amine solvent.

The amine solvent can be of formula NR$_3$ where R is chosen among CH$_3$, C$_2$H$_5$, C$_3$H$_7$, C$_4$H$_9$, C$_6$H$_5$ and their mixtures.

The amine solvent can be of formula NR$_2$R' or NRR'R" wherein R is different from R' and R" and R' is different from R" and any of R, R' and R" can be chosen among CH$_3$, C$_2$H$_5$, C$_3$H$_7$, C$_4$H$_9$ and C$_6$H$_5$.

Preferably, solvent L is triethylamine N(CH$_2$CH$_3$)$_3$.

The hydrodehalogenation of boron halide BY$_3$, optionally complexed in the form of L•BY$_3$, in a hydrogen gas atmosphere to obtain the borane compound BH$_3$, respectively the borane complex L•BH$_3$, is preferably implemented in the presence of a catalyst, preferably chosen among M$_m$B, M$_m$BN and their mixtures, wherein M is chosen among Ni, Pd, Fe, Co, Cu and their mixtures. Examples of hydrodechlorination of N(CH$_2$CH$_3$)$_3$•BCl$_3$ in the presence of Ni$_3$B catalyst is for instance described in C. Reller and F. Mertens, "A self-contained regeneration scheme of spent ammonia borane based on the catalytic hydrodechlorination of BCl3", Angew. Chem. Int. Ed., 2012, 51, 11731-11735, doi:10.1002/anie.201201134. This article also provides details on how to proceed to a reaction of a boron nitride compound BNH in a gaseous hydrogen halide HY atmosphere.

The hydrodehalogenation of boron halide BY$_3$, optionally complexed in the form of L•BY$_3$, can be performed at a temperature greater than or equal to 20°C, notably greater than or equal to 50°C and preferably lower than or equal to 160°C, notably about 130°C and/or at a pressure greater than 1 bar, notably greater than or equal to 10 bar and preferably lower than 80 bar. In example, the hydrodehalogenation of boron halide BCl$_3$, optionally complexed in the form of L•BCl$_3$, can be performed at a temperature ranging between 100°C and 160°C and at a pressure of 60 bar. In another example, the hydrodehalogenation of boron halide BBr$_3$, optionally complexed in the form of L•BBr$_3$, can be performed at a temperature ranging between 100°C and 130°C and at a pressure of 60 bar.

The hydrodehalogenation of boron halide BY$_3$, optionally complexed in the form of L•BY$_3$, can be implemented for a duration of less than 72 hours.

In some embodiments, the hydrodehalogenation of boron halide BY$_3$ complexed in the form of L•BY$_3$, can result in the formation of L•HY, which can be reduced such as to obtain the anhydrous hydrogen halide acid HY. In some other embodiments, the hydrogen halide acid complex L•HY can be reacted with ammonia such as to form NH$_4$Y, especially if the temperature to proceed to the reduction of said halide acid complex is greater than the degradation temperature of solvent L.

The yield of the production of BH$_3$ can be improved by eliminating the produced L-HY, such as to shift the reactions to the desired product and/or by conducting at least two hydrodehalogenation reactions.

In particular, in order to increase said yield, step b) preferably comprises at least:

- performing a first hydrodehalogenation reaction of boron halide BY$_3$ complexed in the form of L•BY$_3$ in the hydrogen gas atmosphere in the presence of the catalyst such as to obtain a first composition comprising a solid phase and a liquid phase comprising L•BH$_3$ and at least one borane compound, such as of L•BY$_3$, L•BHY$_2$ and L•BH$_2$Y,
- recovering the liquid phase from the first composition and prepare a second composition by dissolving the solid phase in the solvent L, in order that at least one borane compound, such as L•BH$_3$, L•BY$_3$, L•BHY$_2$ and L•BH$_2$Y, contained in the solid phase be in solution in the solvent L,
- separate the remaining solid phase, which notably comprises the halide acid complex L•HY, from the liquid phase of the second composition, and recover said liquid phase of the second composition,
- performing a second hydrodehalogenation reaction starting from the liquid phase recovered from the first and second compositions, in the hydrogen gas atmosphere in the presence of the catalyst,
- separating the liquid phase containing L•BH$_3$ and the solid phase both resulting from the second hydrodehalogenation reaction, and
- optionally, recovering the solid phase resulting from the second reaction, and notably evaporating the excess solvent L contained therein.

Said solid and liquid phases can be separated with a centrifuge apparatus.

Embodiments of the process according to the invention are illustrated hereafter with the non-limitative following examples and accompanying figures.

Figure 1 represents the 7Li NMR liquid spectroscopy diagrams of commercial LiAlH$_4$ (upper diagram) and of hydrogenation solid products dissolved in THF and in CDCl$_3$ (lower diagram);

Figure 2 represents the 7Li NMR liquid spectroscopy diagrams of commercial $LiAlH_4$ (upper diagram line) and hydrogenation solid products (middle and lower diagram) dissolved directly in deuterium oxide (D2O);

Figure 3 represents the 11B NMR liquid spectroscopy diagrams of $TEA-BH_3$, $TEA-BCl_3$, liquid phase obtained after a hydrodehalogenation reaction of $TEA-BCl_3$ (test 1) and after a second (test 2) hydrodehalogenation test, in solution in $CDCl_3$;

Figure 4 represents the XRD analysis of the solid phase obtained after tests 1 and 2 of figure 3; the diamond dots correspond to TEA-HCl diffraction peaks;

Figure 5 represents the 11B NMR liquid spectroscopy diagrams of $TEA-BH_3$, $TEA-BBr_3$, liquid phase obtained after a hydrodehalogenation reaction of $TEA-BBr_3$ (test 1) and after a second (test 2) hydrodehalogenation test, in solution in $CDCl_3$;

Figure 6 represents the XRD analysis of the solid phase obtained after tests 1 and 2 of figure 5; the diamond dots correspond to TEA-HBr diffraction peaks;

## Example 1

0.05 g of $LiAl(BNH)_4$, 0.007 g of $TiCl_3$ and 2 ml of tetrahydrofuran have been introduced in an autoclave at a temperature of 25°C. The autoclave has been sealed and $H_2$ has been introduced therein at a pressure of 5 MPa. The temperature of the autoclave has been increased up to 100°C and maintained for 72 hours.

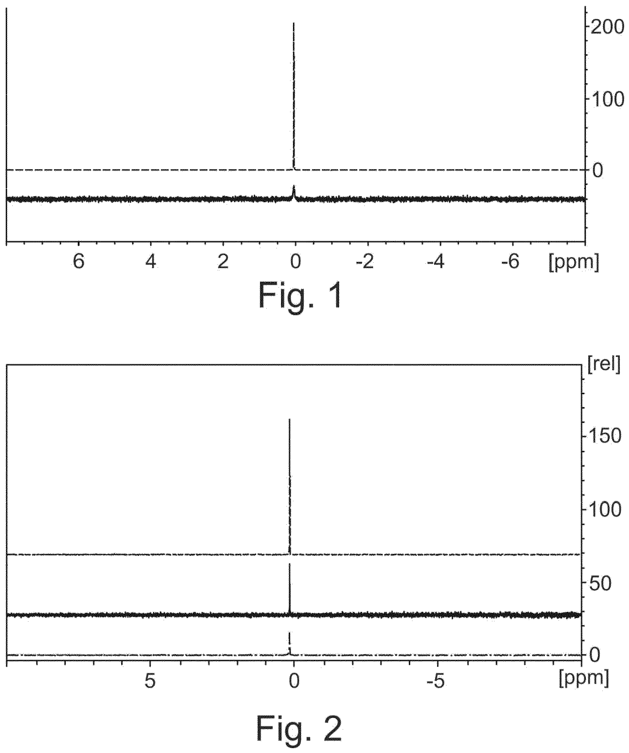

Then, the pressure has been lowered back to atmospheric pressure, and BNH particles as well as a product of formula $LiAlH_4$ were extracted as a solute in THF, as observed in Figure 1. A liquid-solid separation was performed in a centrifuge apparatus and a liquid phase comprising THF and $LiAlH_4$ was allowed to recover. The solvent THF was then evaporated under dynamic vacuum at 60°C for 4h. Figure 2 presents the 7Li NMR liquid spectroscopy diagram of the corresponding $LiAlH_4$.

The digestion of BNH has been done by mixing the BNH compound with $CS_2$ and $AlCl_3$ and submitting the obtained solution in anhydrous HCl gas at a temperature of 80°C and at a pressure of 40 bar.

Further, boron trichloride has been mixed with TEA for 60 minutes at 0°C. Hydrodechlorination of $TEA \cdot BCl_3$ has been conducted by loading a vessel with $TEA \cdot BCl_3$, NiB and TEA. Then the mixture is submitted to a pressure of 67 bar with $H_2$ gas at a temperature of 130 °C. Once pressure has been lowered to atmospheric pressure and temperature has been lowered to room temperature, $TEA \cdot BH_3$ and $TEA \cdot HCl$ have been obtained, present in a composition comprising a solid phase and a liquid phase. The liquid phase and the solid phase were separated by centrifugation. The liquid phase was recovered, and the solid phase was dissolved in TEA to put the boron contained in the solid phase in solution such a to prepare a second solution. The $TEA \cdot HCl$ was then eliminated from the thus dissolved solid phase. Then another hydrodechlorination of $TEA \cdot BCl_3$ has been conducted by loading a vessel with the remaining liquid phase, NiB and TEA in the conditions described here above. Finally, after this another hydrodechlorination, a composition has been obtained which comprises:

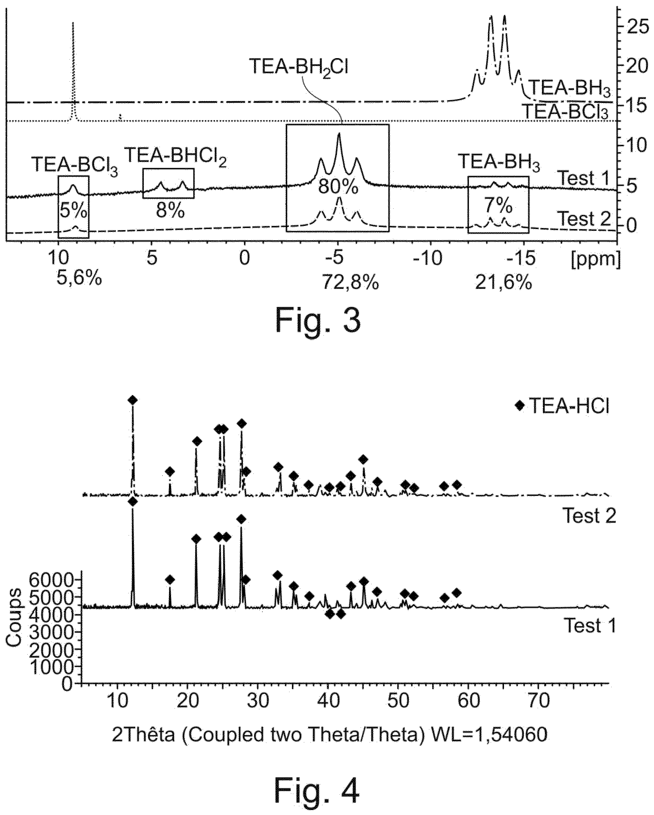

- a liquid phase comprising a content of $TEA \cdot BH_3$ of 21.6 % higher than the one of 7 % in the liquid phase obtained after the first hydrodechlorination, as it can be observed in figure 3, and
- a solid phase comprising $TEA \cdot HCl$, as evidenced by the XRD analysis of figure 4.

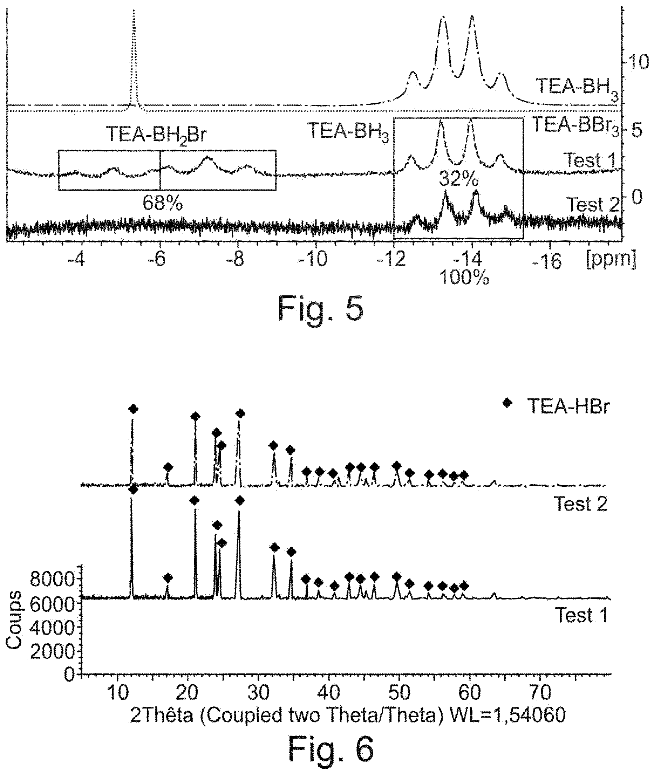

The same hydrodehalogenation procedure was also employed starting from $TEA-BBr_3$. As it can be observed on figures 5 and 6, $TEA-BH_3$ can be obtained with sensibly 100% yield after performing two hydrodehalogenation reaction tests.

Thus, the process has successfully provided a metal hydride $LiAlH_4$, and $TEA \cdot BH_3$ which can be used for preparing $Al(BH_4)_3(NH_3)_6$ and $Li_2Al(BH_4)_5(NH_3)_6$.

Of course, the present invention is not limited to the experiments presented therein for illustrative purpose.

## Claims

1. Process for preparing a metal hydride of formula $A_xMH_{x+m}$ and a borane compound $BH_3$, starting from a product of formula $A_xM(BNH)_{x+m}$, wherein:

   A is an alkali metal,
   M is a metal different from an alkali metal,

   $$0 \leq x \leq 2$$

   m>0,
   the process comprising:

   a) contacting the product of formula $A_xM(BNH)_{x+m}$ with a catalyst comprising a transition metal in solution in an aprotic polar solvent, such as to separate the metal hydride of formula $A_xMH_{x+m}$ and a hydrogenated boron nitride compound BNH,
   b) the synthesis of the borane compound $BH_3$, from the hydrogenated boron nitride compound BNH, the synthesis comprising:

   - a digestion reaction of the boron nitride compound BNH in a gaseous atmosphere containing, even consisting in, an anhydrous hydrogen halide acid gas comprising at least one halogen element Y, such as to produce a boron halide $BY_3$, Y being preferably chlorine Cl,
- a hydrodehalogenation of the boron halide, in a hydrogen gas atmosphere to obtain the borane compound $BH_3$.

2. Process according to claim 1, step a) being performed at a temperature lower than the melting temperature of the metal compound $A_xM$, preferably at a temperature ranging between 0 °C and 150 °C.

3. Process according to anyone of claims 1 and 2, the transition metal being chosen among Ti, Zr, Fe and their mixtures.

4. Process according to anyone of the preceding claims, the catalyst being an halogenide of the transition metal, an alkoxide of the transition metal and their mixtures.

5. Process according to anyone of the preceding claims, the catalyst being chosen among $TiCl_3$, $Ti(OBu)_4$ and their mixtures, preferably being $TiCl_3$.

6. Process according to anyone of the preceding claims, the solvent being chosen among tetrahydrofuran, dimethyl sulphide, triethylamine, diethyl ether, dimethyl ether, diglyme (bis(2-methoxyethyl) ether) and their mixtures, preferably being tetrahydrofuran.

7. Process according to anyone of the preceding claims, step a) being performed in a $H_2$ gas atmosphere, preferably in an autoclave, at a pressure greater than 0.1 MPa, for instance greater than 1.3MPa, and lower than 35MPa.

8. Process according to anyone of the preceding claims, the alkali metal A being chosen among Li, Na, K and their mixtures, in particular the alkali metal A being Li.

9. Process according to anyone of the preceding claims, the metal M being chosen among Mg, Sc, Y, Ti, Zr, Mn, Zn, Al and their mixtures, preferably among the among Zn, Al, Mg and their mixtures.

10. Process according to anyone of the preceding claims, comprising a step c), successive to step b), comprising the preparation a solution of the boron compound $BH_3$ with a solvent L such as to form a borane complex of formula $L \cdot BH_3$.

11. Process according to anyone of the preceding claims, step b) comprising a preparation of a solution of the boron halide $BY_3$ in a solvent L such as to form a $L \cdot BY_3$ complex and the hydrodehalogenation being performed with boron halide being so complexed, such as to obtain the borane compound $BH_3$, complexed in a solvent L in the form of a complex of formula $L \cdot BH_3$.

12. Process according to the preceding claim, wherein step b) comprises at least:

- performing a first hydrodehalogenation reaction of boron halide $BY_3$ complexed in the form of $L \cdot BY_3$ in the hydrogen gas atmosphere in the presence of the catalyst such as to obtain a first composition comprising a solid phase and a liquid phase comprising $L \cdot BH_3$ and at least one borane compound, such as of $L \cdot BY_3$, $L \cdot BHY_2$ and $L \cdot BH_2Y$,
- recovering the liquid phase from the first composition and prepare a second composition by dissolving the solid phase in the solvent L, in order that at least one borane compound, such as $L \cdot BH_3$, $L \cdot BY_3$, $L \cdot BHY_2$ and $L \cdot BH_2Y$, contained in the solid phase be in solution in the solvent L,
- separate the remaining solid phase, which notably comprises the halide acid complex $L \cdot HY$, from the liquid phase of the second composition, and recover said liquid phase of the second composition,
- performing a second hydrodehalogenation reaction starting from the liquid phase recovered from the first and second compositions, in the hydrogen gas atmosphere in the presence of the catalyst,
- separating the liquid phase containing $L \cdot BH_3$ and the solid phase both resulting from the second hydrodehalogenation reaction, and
- optionally, recovering the solid phase resulting from the second reaction, and notably evaporating the excess solvent L contained therein.

13. Process according to anyone of the preceding claims, the digestion reaction resulting in the formation of an ammonia halide of formula $NH_4Y$ and the process comprising the production of ammonia $NH_3$ from the ammonia halide and/or the hydrodehalogenation of $L \cdot BY_3$ being performed at a temperature greater than or equal to 20°C, notably greater than or equal to 50°C and preferably lower than or equal to 160°C and/or at a pressure greater than 1 bar, notably greater than or equal to 10 bar and preferably lower than 80 bar, preferably in the presence of a catalyst.

Fig. 1

Fig. 2

Fig. 3

Fig. 4

Fig. 5

Fig. 6

Europäisches
Patentamt

European
Patent Office

Office européen
des brevets

# EUROPEAN SEARCH REPORT

Application Number

EP 21 19 5378

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WANG KUN ET AL: "Metal B-N-H hydrogen-storage compound: Development and perspectives", JOURNAL OF ALLOYS AND COMPOUNDS, vol. 794, 2019, pages 303-324, XP085690000, ISSN: 0925-8388, DOI: 10.1016/J.JALLCOM.2019.04.240 * page 308 * | 1-13 | INV. C01B3/00 C01B6/10 C01B6/24 C01C1/02 |
| A | US 3 467 505 A (GUEX WALDEMAR ET AL) 16 September 1969 (1969-09-16) * column 1, line 55 - column 2, line 27; example 1 * | 1-13 | |
| A | US 2009/142258 A1 (RITTER JAMES A [US] ET AL) 4 June 2009 (2009-06-04) * examples 2,8 * | 1-13 | |
| A | CHRISTIAN RELLER ET AL: "A Self-Contained Regeneration Scheme for Spent Ammonia Borane Based on the Catalytic Hydrodechlorination of BCl 3", ANGEWANDTE CHEMIE INTERNATIONAL EDITION, vol. 51, no. 47, 19 November 2012 (2012-11-19), pages 11731-11735, XP055104506, ISSN: 1433-7851, DOI: 10.1002/anie.201201134 * the whole document * | 1-13 | TECHNICAL FIELDS SEARCHED (IPC) C01B C01C |

The present search report has been drawn up for all claims

| Place of search | Date of completion of the search | Examiner |
|---|---|---|
| Munich | 7 February 2022 | Werner, Håkan |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 21 19 5378

This annex lists the patent family members relating to the patent documents cited in the above-mentioned European search report.
The members are as contained in the European Patent Office EDP file on
The European Patent Office is in no way liable for these particulars which are merely given for the purpose of information.

07-02-2022

| Patent document cited in search report | | Publication date | Patent family member(s) | | Publication date |
|---|---|---|---|---|---|
| US 3467505 | A | 16-09-1969 | CH | 383938 A | 15-11-1964 |
| | | | GB | 888045 A | 24-01-1962 |
| | | | US | 3467505 A | 16-09-1969 |
| US 2009142258 | A1 | 04-06-2009 | US | 2009142258 A1 | 04-06-2009 |
| | | | WO | 2007002039 A2 | 04-01-2007 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **C. RELLER ; F. MERTENS.** A self-contained regeneration scheme of spent ammonia borane based on the catalytic hydrodechlorination of BCl. *Angew. Chem. Int. Ed.*, 2012, vol. 51, 11731-11735